Europäisches Patentamt

(19) European Patent Office

Office européen des brevets

(11) Publication number: **0 026 630**
**B1**

(12) **EUROPEAN PATENT SPECIFICATION**

(45) Date of publication of patent specification: **21.03.84**

(51) Int. Cl.³: **G 05 B 19/18, B 23 Q 35/12**

(21) Application number: **80303335.6**

(22) Date of filing: **24.09.80**

(54) A tracer control system.

(30) Priority: **28.09.79 JP 125021/79**

(43) Date of publication of application:
**08.04.81 Bulletin 81/14**

(45) Publication of the grant of the patent:
**21.03.84 Bulletin 84/12**

(84) Designated Contracting States:
**DE FR GB**

(56) References cited:
**DE - A - 2 165 862**
**DE - A - 2 742 344**
**DE - B - 2 234 518**

**Patents Abstracts of Japan Vol. 4, No. 3, 11
January 1980, page 139 M 87**
**Patents Abstracts of Japan Vol. 4, No. 49, 15
April 1980 page 84 M 7**
**Patents Abstracts of Japan Vol. 1, No. 96, 30
August 1977 page 2670 M 77**

(73) Proprietor: **FANUC LTD**
**5-1, Asahigaoka 3-chome Hino-shi
Tokyo 191 (JP)**

(72) Inventor: **Imazeki, Ryoji**
**987-44, Naganuma-cho Hachioji-shi
Tokyo (JP)**
Inventor: **Sasaki, Takao**
**469-4, Kobiki-cho Hachioji-shi
Esuteito-Hachioji 2-502 Tokyo (JP)**
Inventor: **Yamazaki, Etuo**
**566-93, Shimoongata-cho Hachioji-shi
Tokyo (JP)**

(74) Representative: **Bedggood, Guy Stuart et al,
Haseltine Lake & Co. Hazlitt House 28
Southampton Buildings Chancery Lane
London WC2A 1AT (GB)**

Courier Press, Leamington Spa, England.

A tracer control system

The present invention relates to a tracer control system, more particularly to a tracer control method for tracing models comprising jerk-points in their surface configuration, wherein deceleration control is started before a jerk-point, detected in the course of a trace path, is reached and wherein the position of said jerk-point is stored in memory means.

In tracer machining if a jerk-point in the surface configuration of a model is traced at the same trace velocity as the other surface parts then the tool may bite into the work-piece, making it difficult to achieve high accuracy in the tracing. A method that has heretofore been employed to avoid this is to provide a conductive film in the vicinity of the jerk-point in the surface configuration of a model made of an insulating material and to establish a closed circuit when a metal stylus is moved into contact with the conductive film, thereby performing deceleration control of the tracing. With this method, however, since the conductive film is formed on the model surface, an error may occur and since the stylus slides directly on the conductive film, a bad contact may be caused therebetween; accordingly, no accurate control can be achieved.

It has been proposed to store in a memory the position of the jerk-points in the surface configuration of the model, discern the relationship of the stylus position in the trace path to the model and perform deceleration control of the tracing before a jerk-point. With this method, in the case where the number of jerk-points in the model configuration is small, their positions can all be stored in the memory, but in the case of a model having a complicated surface configuration, the number of jerk points increases and a large capacity memory is required.

DE—A—2 742 344 (corresponding to US—A—4 164 694) discloses a system for driving a probe, for following a workpiece profile, at an optimum rate. The probe is driven downwards (towards the workpiece) and upwards (away from the workpiece) to make and break contact with the workpiece, by a stepping motor, as the probe is also translated across the workpiece. The contacts with the workpiece, related to the translation of the probe across the workpiece, are used to plot a workpiece profile on a coordinate plotter. If the probe encounters, for example, a downward incline in the workpiece, as it is translated across the workpiece, of such an angle that more than eight steps in the stepping motor are registered in the downward direction after contact with the workpiece has been broken, the workpiece is halted, or slowed, until the probe re-establishes and then breaks contact with the workpiece.

DE—A—2 234 518 (corresponding to US—A—3 743 910) discloses tracing feed rate control for modifying tracing velocity in response to internal corners of a model. When an internal corner is entered a control circuit immediately attenuates tracing feed rate in response to an instantaneous change in the quadrature error signal. The tracing feed rate is then increased as the tracing control changes direction through the corner.

US—A—3 715 646 discloses electronic tracing control for automatically steering the direction of a command feedrate vector to maintain a substantially zero quadrature error. The quadrature vector is perpendicular to a model at the tracing point and has a magnitude representing the error in the position of the tracing finger relative to the model. The quadrature error represents tracing error in the tracing plane perpendicular to the model. The tracing control produces a control signal as a junction of the time average value of the quadrature error signal. The feedrate command signal is steered as a function of the control signal.

DE—A—2 165 862 (corresponding to US—A—3 811 345) discloses an adaptive control system for a numerical control machine with a control program which contains information about the outline of a raw workpiece before blocks commanding the desired outline of the finished workpiece. The length of movements of the bit of the machine towards the direction of the centre of the workpiece at the beginning of the cutting is controlled in a manner such that the cutting depth of the bit is shorter than the length of the cutting edge of the bit and the load of the machine in the cutting operation is controlled so as to be equal to the upper limit of the allowable load.

Patent abstracts of Japan, Vol. 1, No. 96, 30th August 1977, page 2670 M 77, JP—A—52—38687, discloses profiling control intended to enable profiling with small error even when indexing accuracy becomes inferior, by reducing profiling speed when a component of a vector becomes small on a profiling plane. A deviation signal and vector components of the profiling plane deviation are applied to a speed control circuit from a displacement synthesising circuit and a switching circuit. The speed control circuit operates the cosine of an angle between the normal direction of a model and the profiling plane and the value of the cosine is applied as an input to a clamping circuit through a bias voltage circuit and a synthesizing circuit. From the clamping circuit there is produced a speed instruction signal having the angle between the normal direction of the model and the profiling plane as its variable so as to render a velocity smaller when the angle is large and larger when the angle is small. In consequence, profiling speed is reduced when the component of a vector on the profiling plane becomes small.

Patent abstracts of Japan, Vol. 4, No. 49, 15th April 1980, page 84 M 7, JP—A—55—18337, which does not form part of the state of the art pursuant to Article 54(2) EPC, discloses a profile control system wherein when the stylus of a tracer head reaches a machine position region represented by machine position information corresponding to a sudden change in the contour of the model, the profiling speed is reduced. A stylus contacts a model and a displacement composite circuit produces as output a displacement signal, normal direction and tangential direction signals and a command speed signal employed to drive a servo motor. A sudden change in the contour of the model is detected and speed reduced regions are set. From a comparison between the current position of the machine and the speed reduced regions, a reducing signal is supplied through a data output device to a tangential speed operating circuit and profiling speed is reduced.

Patents abstracts of Japan, Vol. 4, No. 3, 11th January 1980, page 135 M 87, JP—A—54 140 279, which does not form part of the state of the art as defined by Article 54(2) EPC, discloses deceleration control in the approach operation when a stylus of a tracer head is brought into contact with a model. In the approach, initially a quick feed operation is used. Output pulses of a position detector are counted by a counter and when the count of the counter reaches a certain value a comparing circuit delivers a deceleration signal. Approach speed is then reduced.

A tracer control method in accordance with the present invention as claimed in claim 1 provides for the detection of the position of each jerk-point in the surface configuration of a model, for the storage of the position in a memory, and for reduction in trace velocity at the jerk-point to permit high accuracy tracing. The method permits a reduction of the required capacity of a memory for storing the positions of jerk-points in the surface configuration of a model.

Briefly stated, in the tracer control method embodying the present invention, a jerk-point in the surface configuration of a model in a forward or backward tracing path is detected; the position of the jerk-point is stored in a memory; in a subsequent tracing the deceleration of tracing is started at a position a predetermined distance short of the position of the jerk-point stored in the memory; and when another slightly different jerk-point in the surface configuration of the model is detected, the memory is updated with the position of this jerk-point and, at the same time, the tracing is released from deceleration and returned to its normal trace velocity.

Reference is made by way of example to the accompanying drawings, in which:—

Figure 1 is a block diagram illustrating apparatus operable in accordance with a method embodying the present invention;

Fig. 2A and 2B are explanatory of a model and the position of deceleration; and

Fig. 3 is a flowchart explanatory of the operation of the method embodying the invention used by the apparatus shown in Fig. 1.

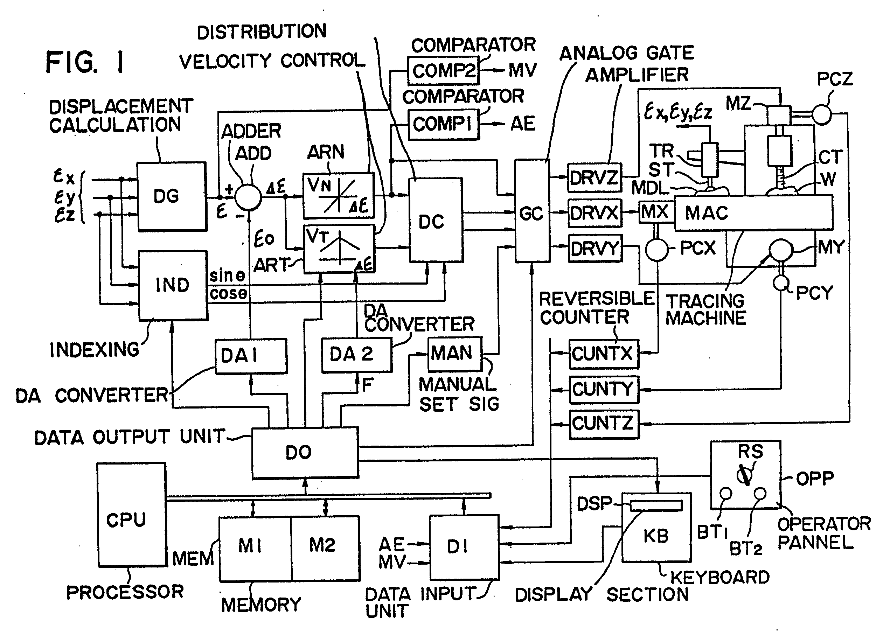

In Fig. 1, reference characters DG and IND respectively indicate a displacement calculation circuit and an indexing circuit which are supplied with displacement signals $\varepsilon_x$, $\varepsilon_y$ and $\varepsilon_z$ from a tracer head TR; ARN and ART designate velocity control circuits; ADD identifies an adder; DC denotes a distribution circuit; COMP1 and COMP2 represent comparators; GC shows an analog gate circuit; DRVX, DRVY and DRVZ refer to amplifiers; MX, MY and MZ indicate servo motors; PCX, PCY and PCZ designate position detectors; MDL identifies a model; ST denotes a stylus; CT represents a cutter; W shows a work; MAC refers to a tracing machine; CUNTX, CUNTY and CUNTZ indicate reversible counters which count pulses from the position detectors to indicate the current position of the stylus ST; MAN designates a manual set signal circuit; OPP identifies an operator panel; RS denotes a setting dial for velocity or the like; BT1 and BT2 represents push buttons; KB shows a keyboard; DSP refers to a display; DI indicates a data input unit; MEM designates a memory composed of a data memory part M1 and a control program part M2; DO identifies a data output unit; CPU denotes a processor; and DA1 and DA2 represent D—A converters.

The stylus ST held in contact with the surface of the model MDL is fed by the servo motors and the displacement calculation circuit DG derives a composite displacement signal

$$\varepsilon = \sqrt{\varepsilon_x{}^2 + \varepsilon_y{}^2 + \varepsilon_z{}^2}$$

from displacement signals $\varepsilon_x$, $\varepsilon_y$ and $\varepsilon_z$ corresponding to the displacement of the stylus ST, and the indexing circuit IND provides direction-of-displacement signals $\sin\theta$ and $\cos\theta$. The composite displacement signal $\varepsilon$ is applied to the adder ADD to obtain a difference $\Delta\varepsilon$ between the composite signal $\varepsilon$ and a reference displacement signal $\varepsilon_0$, which difference $\Delta\varepsilon$ is provided to the velocity control circuit ARN and ART to obtain a normal-direction velocity signal $V_N$ and a tangential-direction velocity signal $V_T$. These signals $V_N$ and $V_T$ are applied to the distribution circuit DC to yield a velocity command signal in accordance with the direction-of-displacement signals $\sin\theta$ and $\cos\theta$, and the velocity command signal thus obtained is supplied to the analog gate circuit GC. The velocity command signal is then provided to that one of the amplifiers DRVX, DRVY and DRVZ which is selected by the analog gate circuit GC. By the amplified velocity command signal, the servo motor corresponding to the selected amplifier is driven to feed the cutter CT and the tracer head TR in ganged relation to each other. Since the operations described above are already well-known in the art, no further detailed description will be given thereof.

In an approach operation until the stylus ST moves into contact with the model MDL, the processor CPU reads out data of an approach axis, an approach direction and an approach velocity from the memory MEM and activates the amplifier, for example, DRVZ via the data output unit DO, causing the servo motor MZ to bring down the tracer head TR and the cutter CT. Before the stylus ST is brought into contact with the model MDL, the displacement signals $\varepsilon_x$, $\varepsilon_y$ and $\varepsilon_z$ are zero, and accordingly the difference signal $\Delta\varepsilon$ remains to be equal in absolute value to the reference displacement signal $\varepsilon_0$. When the composite displacement signal $\varepsilon$ has become equal to the reference displacement signal $\varepsilon_0$ as a result of contacting of the stylus ST with the model MDL, the comparator COMP1 detects that $\Delta\varepsilon=\varepsilon-\varepsilon_0=0$, and applies an approach end signal AE to the data input unit DI. The approach end signal AE is read out by the processor CPU to detect the completion of approach and then tracing is started.

The memory MEM has stored therein both way scan trace, one way scan trace and contour trace modes, a trace direction, a trace velocity, a pick feed direction, a pick feed velocity, a pick feed amount, a trace turning position and so forth. With the start of tracing, the processor CPU reads out the stored contents of the memory MEM and performs tracer control.

In the case where the surface configuration of the MDL changes suddenly, the composite signal $\varepsilon$ becomes large and it is detected by the comparator COMP2 that the variation has exceeded a preset value, and then a jerk signal MV is provided to the data input unit DI. Assuming that tracer control in the X—Z plane is taking place, the contents of the reversible counters CUNTX and CUNTZ at the time when the jerk-point signal is obtained indicate the position of the jerk-point. Accordingly, by writing the contents of the reversible counters CUNTX and CUNTZ in the memory MEM under the control of the processor CPU, the position of the jerk-point is stored; in this way, jerk-points are detected and their positions are stored in the memory MEM in connection with one forward trace path the end of which is detected by the coincidence of the stored trace turning position with the contents of the reversible counters CUNTX and CUNTZ.

In the one-way scan trace, the tracer head TR is quickly returned and in the both-way scan trace, the trace direction is reversed after pick feed.

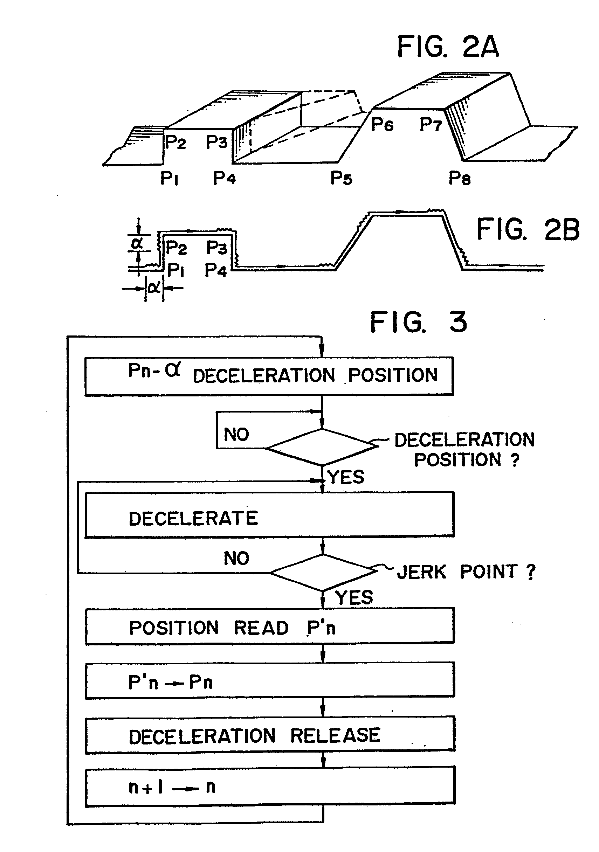

For example, when the model MDL is such as shown in Fig. 2A, points $P_1$ to $P_8$ are detected as jerk-points in the surface of the model and their positions are written in the memory MEM. The positions of the jerk-points $P_1$ to $P_8$ do not vary

in the case of the solid-line configuration but vary in the case of the broken-line configuration. Since the amount of pick feed is very small, however, the variation in the position of each jerk-point relative to adjacent ones of them is slight in almost all cases. Then, the positions of jerk-points thus detected in the previous trace are used as jerk-points in the next trace and the deceleration control is started a predetermined distance short of each jerk-point. And in this trace, jerk-points are detected again and their position are written in the memory MEM to update it.

As the jerk-point updating means, it is also possible to obtain jerk-points in the next trace by extrapolation from data of the previous and the current trace and write them in the memory MEM to update it.

In the control described above, when detecting that the difference between the contents of the reversible counters CUNTX and CUNTZ and the position of a jerk-point stored in the memory has reached a predetermined value, the processor CPU provides a deceleration command, by which the trace velocity during deceleration stored in the memory is read out therefrom and provided via the data output unit DO to the D— A converter DA2, deriving therefrom a commanded velocity signal indicating a low speed. And by the provision of the jerk-point signal MV from the comparator COMP2, it is detected that the stylus ST has passed through the jerk-point in the surface configuration of the model MDL, and the deceleration control is released.

Fig. 3 shows a flowchart explanatory of an example of the operation described above. Letting the distance of deceleration be represented by $\alpha$ as shown in Fig. 2B, when the stylus lies at the position at which $\alpha$ is subtracted from the position of the jerk point $P_n$ (n=1, 2, 3, ...), that is, at a deceleration start position, the deceleration is started and it is checked whether or not a jerk-point is found in the surface configuration of the model MDL; in the case when a jerk-point is found in the model surface, its position $P_n'$ is read in the memory, wherein the previous jerk-point $P_n$ is updated by $P_n'$, and the deceleration is released. This jerk-point is used as the next jerk-point $P_n$ in a next scan. The same operation as described above is repeated for a jerk-point $P_{n+1}$.

The detection of a jerk-point can also be achieved by comparing the amount of change in the composite displacement signal $\alpha$ derived from the displacement calculation circuit DG with a predetermined value. In the both-way scan trace, it is also possible to update the positions of jerk-points by detecting them in either one or both of forward and backward trace paths.

As has been described in the foregoing, according to the present invention, jerk-points in the surface configuration of a model are detected along a trace path and stored in a memory and deceleration control is started at a position short of each jerk-point. At the same time, if a new jerk-point position is detected in the vicinity of a previous jerk-point position, the content of the memory is updated by the position of the new jerk-point. Accordingly, the capacity of the memory used need not be large enough to store all jerk-points of the model but may be enough to store jerk points in one forward or backward trace path alone; therefore, the circuit arrangement can be simplified and hence is economical. Further, the tracing of jerk-points can be performed by the deceleration control with high accuracy.

It will be apparent that many modifications and variations may be effected without departing from the scope of this invention.

## Claims

1. A tracer control method for tracing models (MDL) comprising jerk-points (Pn) in their surface configuration, wherein deceleration control is started before a jerk-point (Pn), detected in the course of a trace path, is reached and wherein the position of said jerk-point (Pn) is stored in memory means (MEM), characterised in that the position of said jerk-point (Pn) is stored in said memory means (MEM) the first time it is detected by detecting means (ST, DG, COMP2) whereby reduction of the trace velocity is started a predetermined distance short of the position of said jerk-point (Pn) as stored in the memory means (MEM) and in that when a slightly different jerk-point (Pn') in the surface configuration of the model (MDL) is detected again, the position of this later jerk-point (Pn') is written in the memory means (MEM) to update the previously stored jerk-point (Pn) position, and the reduction of the trace velocity is released.

2. A method according to claim 1, wherein the detecting means (ST, DG, COMP2) operate to compare an amount of variation in a composite displacement signal ($\varepsilon$), provided by a displacement calculation circuit (DG), and representative of displacement of a stylus (ST) by the surface configuration of the model (MDL), with a predetermined value, and to provide a jerk point detection signal (MV) when the said amount of variation exceeds the predetermined value.

3. A method as claimed in claim 2, wherein the position of a jerk point (Pn, Pn') is indicated by the contents of reversible counters (CUNTY, CUNTZ) which counters contain values representing the current position of the stylus (ST) on the surface configuration of the model (MDL) at the moment of detection of the jerk point (Pn, Pn') by the detecting means (ST, DG, COMP2), and those contents of the reversible counters (CUNTX, CUNTZ) are stored in the memory (MEM) upon detection of the jerk point (Pn, Pn').

4. A method as claimed in any preceding claim, wherein the detecting means (ST, DG, COMP2) are operable to detect a jerk point (Pn, Pn') in either a forward or a backward trace path.

## Patentansprüche

1. Steuerungssystem für Kopier-Werkzeugmaschine, zum Abtasten von Modellen (MDL), die Stoßpunkte (Pn) in ihrer Oberflächenkonfiguration aufweisen, bei welchem eine Verzögerungssteuerung begonnen wird, bevor ein im Verlauf eines Abtastpfades ermittelter Stoßpunkt erreicht wird, und bei welchem die Position des Stoßpunktes (Pn) in einer Speichereinrichtung (MEM) gespeichert wird, dadurch gekennzeichnet, daß die Position des Stoßpunktes (Pn) in der Speichereinrichtung (MEM) das erste Mal gespeichert wird, wenn sie durch eine Ermittlungseinrichtung (ST, DG, COMP2) ermittelt wird, wodurch die Verminderung der Abtastgeschwindigkeit in einem vorbestimmten Abstand vor der Position des in der Speichereinrichtung (MEM) gespeicherten Stoßpunktes (Pn) begonnen wird, und daß, wenn ein etwas unterschiedlicher Stoßpunkt (Pn') in der Oberflächenkonfiguration des Modells (MDL) wieder ermittelt wird, die Position dieses späteren Stoßpunktes (Pn') in die Speichereinrichtung (MEM) geschrieben wird, um die vorher gespeicherte Stoßpunktposition auf neuen Stand zu bringen, und die Verminderung der Abtastgeschwindigkeit freigegeben wird.

2. System nach Anspruch 1, dadurch gekennzeichnet, daß die Ermittlungseinrichtung (ST, DG, COMP2) arbeitet, un einen Variationsbetrag in einem zusammengesetzten Versetzungssignal ($\varepsilon$), das durch eine Versetzungsberechnungsschaltung (DG) geliefert wird und für die Versetzung eines Taststiftes (ST) durch die Oberflächenkonfiguration des Modells (MDL) repräsentativ ist, mit einem vorbestimmten Wert zu vergleichen, und ein Stoßpunktermittlungssignal (MV) zu liefern, wenn der Variationsbetrag den vorbestimmten Wert übersteigt.

3. System nach Anspruch 2, dadurch gekennzeichnet, daß die Position eines Stoßpunktes (Pn, Pn') durch den Inhalt umkehrbarer Zähler (CUNTY, CUNTZ) angezeigt wird, welche Werte enthalten, die die laufende Position des Taststiftes (ST) auf der Oberflächenkonfiguration des Modells (MDL) im Moment der Ermittlung des Stoßpunktes (Pn, Pn') durch die Ermittlungseinrichtung (ST, DG, COMP2) repräsentieren, und daß diese Inhalte der umkehrbaren Zähler (CUNTX, CUNTZ) in dem Speicher (MEM) bei Ermittlung des Stoßpunktes (Pn, Pn') gespeichert werden.

4. System nach einem der vorhergehenden Ansprüche, dadurch gekennzeichnet, daß die Ermittlungseinrichtung (ST, DG, COMP2) arbeitet, um einen Stoßpunkt (Pn, Pn') entweder in einem Vorwärts-Abtastpfad oder in einem Rückwärts-Abtastpfad zu ermitteln.

## Revendications

1. Un procédé de commande de copiage pour copier des modèles (MDL) dont la configuration de surface comporte des points de discontinuité (Pn), dans lequel on commence une commande de décélération avant qu'un point de discontinuité (Pn), détecté au cours d'un chemin de copiage, soit atteint, et dans lequel la position de ce point de discontinuité (Pn) est enregistrée dans des moyens de mémoire (MEM), caractérisé en ce qu'on enregistre la position du point de discontinuité (Pn) dans les moyens de mémoire (MEM) la première fois qu'il est détecté par des moyens de détection (ST, DG, COMP2), ce qui fait qu'une diminution de la vitesse de copiage commence à une distance prédéterminée en avant de la position de point de discontinuité (Pn) qui est enregistrée dans les moyens de mémoire (MEM), et en ce que, lorsqu'un point de discontinuité légèrement différent (Pn') dans la configuration de surface de modèle (MDL) est détecté à nouveau, on écrit la position de ce dernier point de discontinuité (Pn') dans les moyens de mémoire (MEM), pour mettre à jour la position du point de discontinuité (Pn) enregistrée précédemment, et on fait cesser la diminution de la vitesse de copiage.

2. Un procédé selon la revendication 1, dans lequel les moyens de détection (ST, DG, COMP2) comparent avec une valeur prédéterminée une valeur de variation dans un signal de déplacement composite ($\varepsilon$), fourni par un circuit de calcul de déplacement (DG), et représentative du déplacement d'un palpeur (ST) par la configuration de surface du modèle (MDL), et ils produisent un signal de détection de point de discontinuité (MV) lorsque cette valeur de variation dépasse la valeur prédéterminée.

3. Un procédé selon la revendication 2, dans lequel la position d'un point de discontinuité (Pn, Pn') est indiquée par le contenu de compteurs réversibles (CUNTY, CUNTZ), qui contiennent des valeurs représentant la position courante de palpeur (ST) sur la configuration de surface du modèle (MDL) au moment de la détection du point de discontinuité (Pn, Pn') par les moyens de détection (ST, DG, COMP2), et les contenus des compteurs réversibles (CUNTX, CUNTZ) sont enregistrés dans la mémoire (MEM) au moment de la détection d'un point de discontinuité (Pn, Pn').

4. Un procédé selon n'importe quelle revendication précédente, dans lequel on peut faire fonctionner les moyens de détection (ST, DG, COMP2) de façon à détecter un point de discontinuité (Pn, Pn') dans un chemin de copiage en sens avant ou en sens arrière.

FIG. 1

## FIG. 2A

## FIG. 2B

## FIG. 3

$P_n - \alpha$ DECELERATION POSITION

NO — DECELERATION POSITION ?

YES

DECELERATE

NO — JERK POINT ?

YES

POSITION READ $P'_n$

$P'_n \rightarrow P_n$

DECELERATION RELEASE

$n + 1 \rightarrow n$